(19) Europäisches Patentamt
European Patent Office
Office européen des brevets

(11) **EP 2 681 858 B1**

(12) **EUROPEAN PATENT SPECIFICATION**

(45) Date of publication and mention
of the grant of the patent:
**03.05.2017 Bulletin 2017/18**

(21) Application number: **11705625.9**

(22) Date of filing: **02.03.2011**

(51) Int Cl.:
**H04H 20/67** $^{(2008.01)}$ **H04N 7/24** $^{(2011.01)}$

(86) International application number:
**PCT/EP2011/053091**

(87) International publication number:
**WO 2012/116743 (07.09.2012 Gazette 2012/36)**

(54) **DETERMINISTIC RE-MULTIPLEXING FOR SFN NETWORKS**

DETERMINISTISCHES MULTIPLEXVERFAHREN FÜR GLEICHWELLENNETZE

MULTIPLEXAGE DÉTERMINISTE POUR RÉSEAUX MONOFRÉQUENCE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**08.01.2014 Bulletin 2014/02**

(73) Proprietor: **Nevion Europe AS
3204 Sandefjord (NO)**

(72) Inventors:
• **STEPHANSEN, Helge
N-1900 Fetsund (NO)**
• **JENSEN, Bjørn, Tommy
N-1344 Haslum (NO)**
• **ROGNSTAD, Ivar
N-0682 Oslo (NO)**

(74) Representative: **Onsagers AS
Munkedamsveien 35
P.O. Box 1813 Vika
0123 Oslo (NO)**

(56) References cited:
**WO-A1-2010/043498**

• **DVB ORGANIZATION:
"t2_0583r0_ETSI_dTS_102773v010201_46_T2-M
I .doc", DVB, DIGITAL VIDEO BROADCASTING,
C/O EBU - 17A ANCIENNE ROUTE - CH-1218
GRAND SACONNEX, GENEVA - SWITZERLAND,
16 April 2010 (2010-04-16), XP017833432,**
• **DVB ORGANIZATION: "T2_0300_Network
considerations for DVB-T2 & TFS.pdf", DVB,
DIGITAL VIDEO BROADCASTING, C/O EBU - 17A
ANCIENNE ROUTE - CH-1218 GRAND
SACONNEX, GENEVA - SWITZERLAND, 16
November 2007 (2007-11-16), XP017817578,**
• **IRINI S RELJIN ET AL: "DVB standards
development", TELECOMMUNICATION IN
MODERN SATELLITE, CABLE, AND
BROADCASTING SERVICES, 2009. TELSIKS '09.
9TH INTERNATIONAL CONFERENCE ON, IEEE,
PISCATAWAY, NJ, USA, 7 October 2009
(2009-10-07), pages 263-272, XP031573513, ISBN:
978-1-4244-4382-6**
• **ARIK KESHET: "CHALLENGES IN DVB-H
NETWORK DEPLOYMENT", INTERNATIONAL
BROADCASTING CONFERENCE 2009; 9-9-2009 -
13-9-2009; AMSTERDAM,, 9 September 2009
(2009-09-09), XP030081653,**

**Description**

**Introduction**

The present invention relates to a method and system for sending signals over a Single Frequency Network. More specifically, the invention is described by a solution for deterministic re-multiplexing of transport streams, to achieve identical signals to feed modulators at different transmitter sites in a Single Frequency Network. The invention makes it possible to use a common satellite transmission to feed both end users directly, and also multiple SFN regions in a terrestrial broadcast network. The principles described in the solution are applicable to both DVB-T and DVB-T2 networks.

**Background**

A Single Frequency Network (SFN) is a broadcasting network where several transmitters simultaneously send the same signal at the same time over the same frequency channel in the same geographical area. Use of SFN may increase the coverage area and decrease the outage probability in comparison to use of Multi Frequency Networks.

In an SFN region, it is crucial that all transmitters are fed with exactly the same bit stream. Everything from packet sequence to Program Clock Reference (PCR) stamps in the transmitted signals need to be identical, bit-by-bit. The transport stream to be transmitted is generally divided into a continuous sequence of transmission *blocks*, where information about transmission time for a block is contained in a system specific block descriptor transport stream (TS) packet. SFN can be implemented by letting SFN adapters generate these block descriptor packets.

Often, local adaptation of the content in an SFN region is required; for example insertion of local programs/services. A regional multiplexer typically needs to receive two or more feeds, forwarding select content from each feed as needed for that region. The challenge with this scenario is that all regional multiplexers at different sites in the same SFN region need to produce exactly the same output to fulfil the SFN system requirements.

The proposed solution involves multiplexers both at the main head-end and regional head-ends. The examples and drawings in this disclosure assume that a satellite system is used as the distribution method between the main head end and the SFN regions. The described system will however work fine with other types of distribution systems, like IP networks.

The proposed solution is designed so that the re-multiplexing, i.e. the SFN adaptation process, becomes fully deterministic, making it possible for a set of geographically distributed multiplexers to produce exactly the same output stream when fed with the same input signals and the same configuration settings.

**Brief description of the invention**

The main characteristics of the solution are deterministic placement of Transport Stream (TS) packets received from different input streams. This means that it is possible to multiplex services from one or more input sources without any fixed limit, and the resulting output packet sequence is fully predictable.

The deterministic re-multiplexing of transport streams in SFN is performed by a method comprising the following steps that are performed at the main head end:

- receiving feeds from at least one source, each feed being multiplexed by multiplexers being referenced by a common *1PPS* signal;

- providing internally virtual SFN adapters for each multiplexer, where these adapters generate virtual SFN streams denoting the block structure to be used at remote receiving SFN regions;

- inserting Time Marker Packets (TMP) into said virtual SFN streams, said TMPs comprising timing information measured relative to said *1PPS* signals, where said TMPs have a frequency corresponding to the frequency of system specific block descriptor packets for the local SFN transmission scheme;

- applying modulation with rate adaptation to outgoing final multiplexed transport streams,

and where the following steps are performed at each regional transmitter site:

- receiving at least one of said final multiplexed transport streams on the inputs of deterministic re-multiplexers;

- extracting the timing information from said Time Marker Packets in a virtual SFN stream to produce a compliant and fully deterministic output stream that will be accepted by each local SFN modulator for the region.

The invention also comprises a system with means for performing deterministic re-multiplexing of transport streams in SFN.

The enclosed main claims define the scope of protection, and dependent claims define further aspects of the invention.

**Brief description of the drawings**

The present invention will be described in detail with reference to a preferred embodiment as shown in the following drawings:

Figure 1 shows a system overview of the deterministic SFN re-multiplexing;

Figure 2 shows the time marker packet insertion process;

Figure 3 shows details of the Time Marker Packet, and

Figure 4 shows an overview of the deterministic re-multiplexing process.

**Detailed description**

The object of the present invention is to perform deterministic re-multiplexing of transport streams in Single Frequency Networks (SFN).

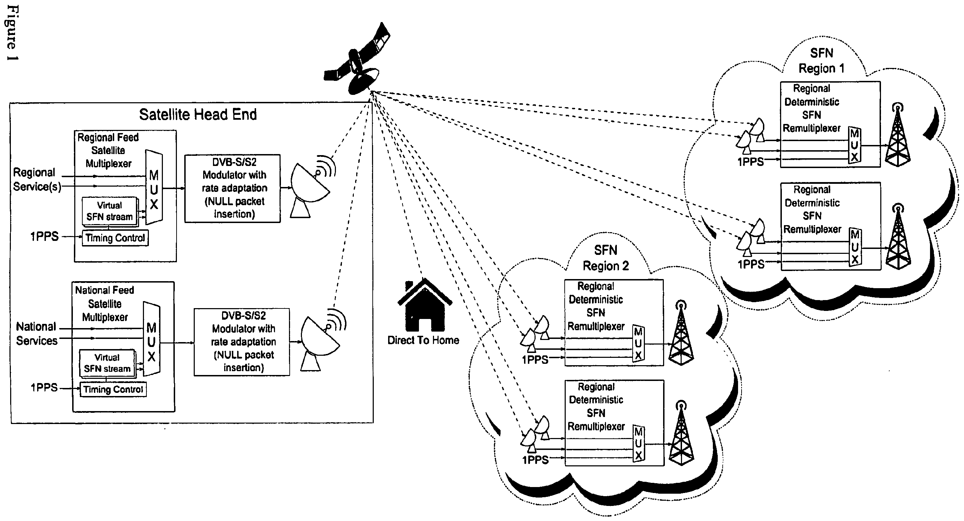

Figure 1 shows an example of an overview of a system with deterministic SFN re-multiplexing. The figure shows that the main (national) feed is generated at the head end, and also that the feed with regional services are generated at the same location. This is however not a requirement.

It is further not required that a satellite system is used as the distribution system between the main head end and the SFN regions. Other types of distribution systems may be used, and is comprised in the claimed scope of protection.

For timing control, the multiplexers at the main head end are referenced with *1PPS* signals from a common source. Each of these multiplexers contains several internal virtual SFN adapters, one for each addressed SFN region. For each virtual SFN adapter, a sequence of special marker packets is inserted into the outgoing multiplex. The interval between these marker packets corresponds to the duration of the system specific block in the transmitted SFN stream.

At each transmitter site in an SFN region, a re-multiplexer receives the different satellite feeds. Inserting the same timing information into the streams ensures that each re-multiplexer uses timing information to produce compliant, fully deterministic output streams that will be accepted by the SFN modulators.

The inventive method comprises several steps to be performed at the main head end and at the sites where regional transmitters are located.

The purpose of a virtual SFN adapter is to construct a template SFN transport stream for a given region. The most essential part of this process is to insert timing information, contained in Time Marker Packets (TMP packets), into the outgoing satellite stream. The inserted TMPs contain all timing information needed in the re-multiplexing process. They also act as a placeholder for the system specific block descriptor packet contents, since TMPs are also used as source for regeneration of block descriptor packets in the remote stream. For a DVB-T network, the block descriptor packets are represented by the MIP - the Megaframe Initialisation Packet.

The bandwidth used for these TMPs are negligible, as there will only be one packet per transmission block per SFN region (modulation type).

The virtual SFN adapter also generates the Program Specific Information (PSI) and content metadata to be used in the SFN regions. The tables are typically remapped to a set of custom Packet IDs (PIDs). In each SFN region, these components are remapped back to the normal PID values. PSI and content metadata are typically regenerated based on a service selection process.

In Figure 1, the virtual SFN adapters are depicted as internal modules in the main head end multiplexer. However, since the timing insertion tolerates rate change after TMP insertion, the adapters may well be located in an external multiplexer before the main multiplexer.

As said, the inventive method comprises several steps to be performed at the main head end and at the end where regional transmitters are located. This involves use of multiplexers both at the main head-end and regional head-ends.

The first step in the inventive method is receiving feeds from at least one source, e.g. national or regional. Each feed is then being multiplexed by multiplexers at the satellite head end being referenced by 1PPS signals.

The second step is providing internal virtual SFN adapters for each multiplexer, where these adapters generate virtual SFN streams denoting the SFN block structure to be used at remote receiving SFN regions.

The virtual SFN adapters may further generate Program Specific Information (PSI/SI) to be used in remote SFN regions.

The next step is inserting Time Marker Packets (TMP) into said virtual SFN streams, where said TMPs comprise timing information measured relative to said 1PPS signals. The TMPs have a frequency corresponding to the system specific block descriptor packet repetition rate, which e.g. corresponds to Mega-frame Initialisation Packet (MIP) in case of DVB-T networks.

The TMPs may further comprise essential system specific block descriptor data to be used as source for regeneration of system specific block descriptor packets in streams generated at regional sites. This may include information to control transmitters. They also contain ideal time stamps relative to a common 1PPS signal and corresponding Program Clock Reference (PCR) stamps, and the Packet ID.

The last step performed at the head end is applying modulation with rate adaption to the outgoing final multiplexed transport streams.

At each regional SFN transmitter site there are deterministic re-multiplexers receiving one or more of said final multiplexed transport streams. In the example shown in Figure 1 these signals are routed through a Direct-to-Home broadcast satellite. One of the inputs of the re-multiplexers at each regional transmitter site is selected as a master that will control the build process of outgoing SFN blocks from the transmitter, and each re-multiplexer performs the multiplexing on Packet ID (PID) basis.

Timing information is extracted from said information markers in the virtual SFN streams for producing compliant and fully deterministic output streams that will be accepted by modulators.

The re-multiplexers will multiplex on a PID-by-PID basis, following strict rules. For example, there can be no non-deterministic internal data carousels for opportunistic playout of PSI or content metadata sections.

Several parameters need to be configured in each multiplexer. This includes inputs to be enabled and bitrate for each input. The bitrate cannot be determined by measuring methods. It must be fixed in order to obtain correct deterministic operation. Thus the fixed bitrate to be used for each input is configured.

Another parameter that must be configured is the master input that contains the TMPs denoting the required SFN block structure, and which will be used to regenerate the system specific block descriptor packets.

Further, PID filtering and re-mapping rules must be configured for each input. This includes routing of the selected components to be forwarded in the regional SFN multiplex, and remapping and forwarding of the centrally generated PSI/SI tables.

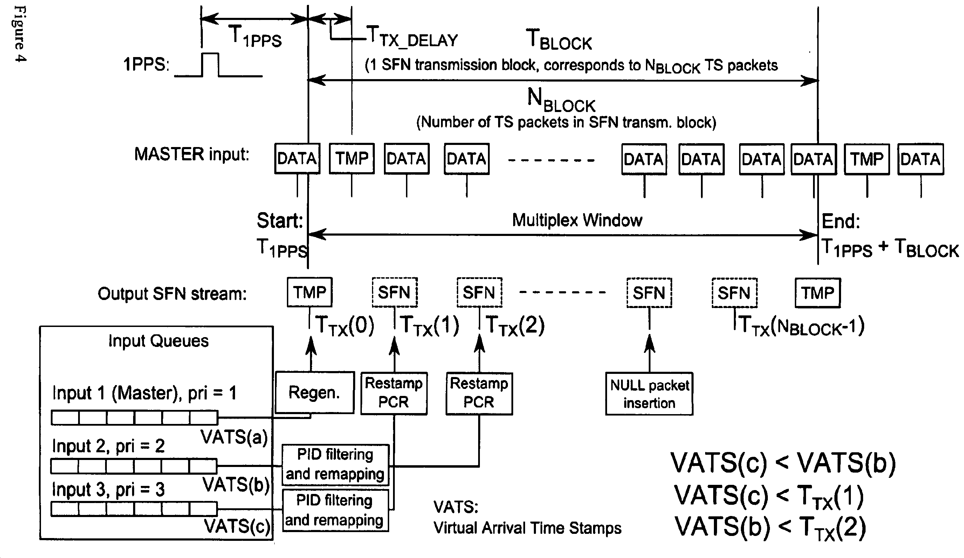

Said Time Marker Packet in the master input defines a time window relative to 1PPS which starts at $T_{1PPS}$ and ends at $T_{1PPS} + T_{BLOCK} - 1$, where $T_{BLOCK}$ is the duration of an SFN transmission block and where a set of re-mapping rules are applied. These rules will be further explained below with reference to Figure 4.

Each remote re-multiplexer in the same SFN region needs to use identical configurations in order to produce identical output streams.

The deterministic re-multiplexing according to the invention has several characteristics.

The main characteristics of the solution are deterministic placement of TS packets received from different input streams. This means that it is possible to multiplex services from one or more input sources without any fixed limit, and the resulting output packet sequence is fully predictable.

Due to the change of TS bitrate when going from e.g. a satellite feed to a local SFN region, PCR re-stamping needs to be performed, i.e. deterministic PCR re-stamping of TS packets. The outgoing video packets in an SFN region will have PCR jitter that is within the maximum jitter permitted for the PCR, which is +/- 500 ns.

Another characteristic is deterministic insertion of system specific block descriptor packets, where each such packet will be inserted with predictable frequency, to produce compliant streams for the particular SFN modulation type in use.

Packets from inputs will be interleaved as smoothly as possible, keeping the introduced packet jitter at a minimum.

Different SFN regions may use different modulation parameters, thereby leading to different bitrates and different block sizes. The solution according to the invention is able to handle multiple block sizes (modulation types). This means that all different SFN regions may still be fed by the same main multiplex (National Feed in figure 1).

There is no need for any specific synchronisation between different source multiplexers; only a common 1PPS reference signal is needed at every location.

The presented solution handles *NULL* packet insertion (i.e. rate adaptation) at any stage between the main head end and the remote SFN site. This is an important aspect since many operators use DVBS/S2 modulators configured with an independent output bit rate, and thereby performs *NULL* packet insertion and PCR re-stamping.

A further aspect of the invention is that an in-band solution for remote control can be implemented. Configuration messages addressed to a set of re-multiplexers in a remote SFN region can be inserted into the satellite multiplex, making it easy to manage a set of re-multiplexers synchronously from a central location.

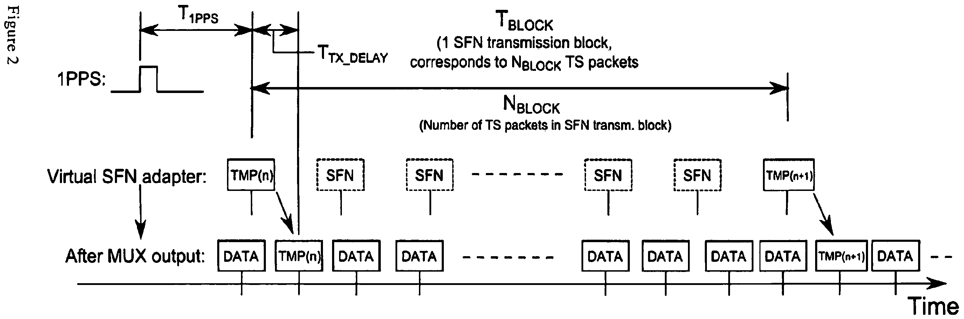

Figure 2 shows the TMP insertion process, and this will now be explained in detail. A TMP is a special kind of block descriptor packet that contains information to be used in the re-multiplexing process. The frequency of these packets matches the corresponding block descriptor packet frequency in the remote SFN region. The PID value of a TMP packet can be configured.

TMP packets contain both an ideal timestamp and a real timestamp, which indicates the actual position in the stream when a TMP packet leaves the multiplexer. The real time stamp is also translated to a PCR field that will be used to compensate for later rate adaptation or re-multiplexing of the stream. TMPs also contain system specific block descriptor contents and a time, $T_{B\_TX}$, that tells the regional multiplexer when to transmit/output the first TS packet in the block, relative to 1PPS.

The TMP packets allow a deterministic virtual "arrival" timestamp to be calculated for all TS packets in the same stream. These timestamps are used in the multiplexing process. Timestamps denoted with $T_{<IDENTIFIER>}$ are measured in 27MHz cycles, relative to a 1PPS source. The maximum value for these timestamps is 26999999.

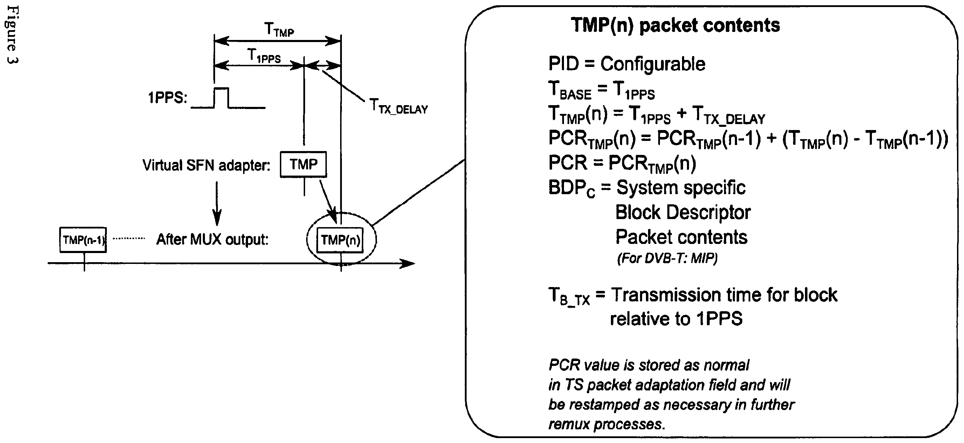

Figure 3 shows details of the Time Marker Packet. $T_{1PPS}$ is the distance from the last *1PPS* pulse to the ideal transmission time for a TMP packet. However, due to the multiplexing process it is not possible to send the packet exactly at that time. A delay, $T_{TX\_DELAY}$, is introduced before the packet leaves the multiplexer. The sum of these values is named $T_{TMP}$ and the value indicates the distance from the 1PPS pulse to the start of the TMP packet transmission.

A PCR value for each transmitted TMP packet is calculated. The PCR value is incremented with the number of cycles corresponding to the difference between the current and previous $T_{TMP}$ value, e.g. ($T_{TMP}(n) - T_{TMP}(n-1)$). The absolute value of the PCR value is not important. The calculated PCR value is stored both in a separate field, $PCR_{TMP}$ and as a normal PCR field in the TS packet. Initially, these values are exactly the same. In case the transport stream is rate adjusted later on, the difference between *PCR* and *$PCR_{TMP}$* indicates the packet displacement due to rate adaptation.

$T_{BLOCK}$ is the mathematical, ideal duration of one SFN transmission block. $N_{BLOCK}$ is the corresponding fixed number of TS packets in one such block.

On the receive side, deterministic arrival time stamps, named VATS - Virtual Arrival Time Stamps, can be calculated for any input that contains a stream of TMPs. Let $T_{INT}$ be a fixed value for the time difference between two TS packets in the multiplex. $T_{INT}$ is a deterministic value that can easily be calculated from the configured bitrate of the input transport stream.

For a packet *P* that is displaced *M* packets from the TMP, the Virtual Arrival Time Stamp becomes:

$$T_{ARRIVAL}(M) = M * T_{INT} + T_{TMP} + (PCR - PCR_{TMP}) + T_{CORR}$$

If the stream is received with no changes since it was generated, the difference between the two PCR values will be 0.

$T_{CORR}$ is a constant that is configurable per input. It needs to be the same for all multiplexers in a region. It may be used to adjust the time offset between the inputs in case there are significant differences in propagation delay for the various inputs. The default value for $T_{CORR}$ is 0.

$T_{ARRIVAL}(M)$ is used for both re-multiplexing and PCR correction, as described below.

Figure 4 shows an overview of the deterministic re-multiplexing process. One input, typically the main feed, is selected as the master for the re-multiplexing process. Time Marker Packets in this stream indicate the start of a new block to be re-multiplexed.

The TMP in the master input defines a time window (relative to 1PPS) which starts at $T_{1PPS}$ and ends at $T_{1PPS} + T_{BLOCK} - 1$.

The multiplexer output rate is locked to 1PPS and it is determined by the $T_{BLOCK}$ and $N_{BLOCK}$ values, according to the current modulation scheme. For a packet at offset *N* in an outgoing SFN transmission block a time stamp for transmission of a packet $T_{TX}(N)$ is calculated:

$$T_{TX}(N) = T_{1PPS} + (N * T_{BLOCK})/N_{BLOCK}.$$

For every outgoing packet position the calculated transmit time $T_{TX}(N)$ is compared to virtual arrival time stamps for a set of incoming packets. The rules for re-multiplexing at each position are as follows:

> At start-up of the process, TS packets to be considered must have an arrival time within the start of said time window and a calculated time $T_{TX}(N)$. Once started, TS packets to be considered must have an arrival time that is less than $T_{TX}(N)$.

The first packet to be inserted in a period is the system specific block descriptor packet. This packet is regenerated from the TMP packet.

PID filtering/remapping rules are checked for each input to decide which packets that should be forwarded;

If more than one packet has arrived that should be inserted into the output, the packet with the lowest time stamp is used;

If two packets have exactly the same arrival time, the packet with the highest priority input is used.

In case of temporary buffer increase due to bursts in the incoming TS packet rate for a PID, the multiplexer may experience that a backlog of packets are building up. E.g. the difference between $T_{TX}(N)$ and $T_{ARRIVAL}(M)$ increases temporarily. The multiplexer will accept a difference given by a time $T_{BACKLOG}$. If the difference exceeds $T_{BACKLOG}$, the TS packet is dropped. $T_{BACKLOG}$ is a global parameter that is common for all re-multiplexers in a region.

If no packet satisfies the criteria to be multiplexed, then a *NULL* packet is inserted. The content of the *NULL* packet is predefined and must be the same for all regional multiplexers within the SFN region.

The multiplexing method according to the invention is fully deterministic and will lead to exactly the same packet output sequence from independent re-multiplexers, even in case of temporary overflow situations.

When PCR packets are to be inserted into an outgoing multiplex, the packet position will be shifted due to the change of bit rate. If the packets contain PCR fields, the re-multiplexer needs to perform PCR adjustment, i.e. a PCR re-stamping process. This process is straightforward as the arrival time stamps $T_{ARRIVAL}(M)$ and departure times $T_{TX}(N)$ are already calculated and used in the re-multiplexing process. Say that a specific packet contains PCR and that this packet was received at offset *M* from the corresponding TMP in the incoming stream. If the packet is sent at position *N* in the output block, the new outgoing PCR value is calculated as follows:

$$PCR_{OUT} = PCR_{IN} + T_{TX}(N) - T_{ARRIVAL}(M)$$

The PCR value is adjusted for the change in packet position. It should be noted that the expression ($T_{TX}(N)$ - $T_{ARRIVAL}(M)$) must be treated modulo 27000000. 26999999 corresponds to -1, 26999998 corresponds to -2 and so on.

E.g. if $T_{TX}(N)$ is 1 and $T_{ARRIVAL}(M)$ is 26999999, the correction factor will be 2.

**Claims**

1. A method for deterministic re-multiplexing of transport streams in Single Frequency Networks, SFN, the method comprising the following steps performed at the main head end:

   - receiving feeds from at least one source, each feed being multiplexed on multiplexers being referenced by a common 1PPS signal;
   - providing internal virtual SFN adapters for each multiplexer, where these adapters generate virtual SFN streams denoting the system specific block structure to be used at remote receiving SFN regions;
   - inserting Time Marker Packets, TMP, into said virtual SFN- streams, said TMPs comprises SFN and PCR timing information measured relative to said 1PPS signals, where said TMPs have a frequency corresponding to the transmission block frequency of the SFN streams, and where said PCR timing information includes a PCR and a PCR$_{TMP}$ which is a copy of the original PCR, where the PCR timing clocks have a frequency of 27 MHz and are locked to the same 1 PPS signal;
   - applying rate adaptation that matches the system specific modulation scheme to outgoing final multiplexed transport streams,

   and where the following steps are performed at regional transmitter sites:

   - receiving at least one of said final multiplexed transport streams on inputs of deterministic re-multiplexers;
   - extracting the SFN and PCR timing information from information markers in the virtual SFN streams for producing compliant and fully deterministic output streams that will be accepted by the SFN modulators.

2. A method according to claim 1, where the virtual SFN adapters further generate the Program Specific Information and content metadata to be used in remote SFN regions.

3. A method according to claim 1, where the TMP further comprises:

   - System specific content that will be used as source for regeneration of system specific block descriptor packets, like MIP for DVB-T, at regional sites;
- an ideal time stamp and a real time stamp indicating the real position in the stream;
- corresponding PCR values that is used to detect and compensate for rate adaptation in the transmission chain;
- system specific block descriptor packet contents (e.g. MIP), and
- transmission time for the first packet in the block, relative to 1PPS.

4. A method according to claim 1, where one of the inputs of the re-multiplexers at each regional transmitter site is selected as the master that will control the build process of outgoing SFN blocks of the transmitter, and each re-multiplexer performs the multiplexing on Packet ID (PID) basis.

5. A method according to claim 1 and 4, where the following and identical parameters are configured in each re-multiplexer located in the same SFN region:

- the inputs to be enabled, and a fixed bitrate to be used for each input;
- the master input containing the TMPs that will be used as main markers for the re-multiplexing process;
- PID filtering and re-mapping rules applied to each input to decide which packets that should be forwarded in the regional SFN multiplex, and remapping and forwarding of centrally generalised PSI tables and content metadata.

6. A method according to claim 5, where the Time Marker Packet in the master input defines a time window relative to 1PPS, which starts at $T_{1PPS}$ and ends at $T_{1PPS} + T_{BLOCK} - 1$, where $T_{BLOCK}$ is the duration of an SFN transmission block, and where the following remapping rules are applied:

- TS packets to be considered must have an arrival time that is less than the calculated time $T_{TX}(N)$;
- if there are no packets that satisfies the criteria to be multiplexed, then a *NULL* packet is inserted;
- if there are more that one packet that should be inserted into the output, the packet with the lowest time stamp is used;
- if two packets have exactly the same arrival time, the packet with the highest priority input is used;
- in case the difference between $T_{TX}(N)$ and the VATS time stamp exceeds a configured value $T_{BACKLOG}$, the packet is dropped.

7. System for deterministic re-multiplexing of transport streams in Single Frequency Networks, the system comprising means for performing the method according to claims 1-6.

**Patentansprüche**

1. Verfahren zur deterministischen Remultiplexierung von Transportströmen in Einzelfrequenznetzen (SFN - *Single Frequency Networks*), wobei das Verfahren die folgenden Schritte umfasst, die am Hauptkopfende durchgeführt werden:

- Empfangen von Einspeisungen aus mindestens einer Quelle, wobei jede Einspeisung an Multiplexern gemultiplext wird, die durch ein gemeinsames 1PPS-Signal referenziert sind;
- Bereitstellen von internen, virtuellen SFN-Adaptern für jeden Multiplexer, wobei diese Adapter virtuelle SFN-Ströme generieren, welche die systemspezifische Blockstruktur bezeichnen, die in entfernten empfangenden SFN-Regionen verwendet werden soll;
- Einsetzen von Zeitmarkerpaketen (TMP - *Time Marker Packets*) in die virtuellen SFN-Ströme, wobei die TMP in Bezug auf die 1PPS-Signale gemessene SFN- und PCR-Taktinformationen umfassen, wobei die TMP eine Frequenz haben, die der Übertragungsblockfrequenz der SFN-Ströme entspricht, und wobei die PCR-Taktinformationen eine PCR und eine $PCR_{TMP}$ enthalten, die eine Kopie der Original-PCR ist, wobei die PCR-Zeittakte eine Frequenz von 27 MHz haben und für dasselbe 1PPS-Signal gesperrt sind;
- Anwenden einer Ratenanpassung, welche das systemspezifische Modulationsschema an ausgehende endgültige gemultiplexte Transportströme anpasst,

und wobei die folgenden Schritte an regionalen Senderstandorten durchgeführt werden:

- Empfangen von mindestens einem der endgültigen gemultiplexten Transportströme an Eingängen der deterministischen Remultiplexer;

- Extrahieren der SFN- und PCR- Taktinformationen aus Informationsmarkern in den virtuellen SFN-Strömen, um konforme und voll deterministische Ausgangsströme zu produzieren, die von den SFN-Modulatoren akzeptiert werden.

**2.** Verfahren nach Anspruch 1, wobei die virtuellen SFN-Adapter darüber hinaus die programmspezifischen Informationen und Inhaltsmetadaten generieren, die in entfernten SFN-Regionen verwendet werden sollen.

**3.** Verfahren nach Anspruch 1, wobei das TMP darüber hinaus umfasst:

- einen systemspezifischen Inhalt, der als Quelle zur Regeneration von systemspezifischen Blockdeskriptorpaketen, wie MIP für DVB-T, an regionalen Standorten verwendet wird;
- einen idealen Zeitstempel und einen echten Zeitstempel, der die echte Position in dem Strom angibt;
- entsprechende PCR-Werte, die dazu verwendet werden, eine Ratenanpassung in der Übertragungskette zu erfassen und diese auszugleichen;
- systemspezifische Blockdeskriptorpaketinhalte (z.B. MIP), und
- eine Übertragungszeit für das erste Paket im Block, in Bezug auf 1PPS.

**4.** Verfahren nach Anspruch 1, wobei einer der Eingänge der Remultiplexer an jedem regionalen Senderstandort als der Master ausgewählt wird, der den Bildungsprozess von ausgehenden SFN-Blöcken des Senders steuern wird, und jeder Remultiplexer das Multiplexieren auf Paket-ID (PID)-Basis durchführt.

**5.** Verfahren nach Anspruch 1 und 4, wobei die folgenden und identischen Parameter in jedem Remultiplexer konfiguriert sind, der sich in derselben SFN-Region befindet:

- die freizugebenden Eingänge und eine feste Bitrate, die für jeden Eingang verwendet werden soll;
- der Master-Eingang, der die TMP enthält, die als Hauptmarker für den Remultiplexierungsprozess verwendet werden;
- PID-Filterungs- und Remapping-Regeln, die auf jeden Eingang angewendet werden, um zu entscheiden, welche Pakete in dem regionalen SFN-Multiplex weitergeleitet werden sollten, und Remappen und Weiterleiten von zentral generalisierten PSI-Tabellen und Inhaltsmetadaten.

**6.** Verfahren nach Anspruch 5, wobei das Zeitmarkerpaket im Master-Eingang ein Zeitfenster in Bezug auf 1PPs definiert, das bei $T_{1PPS}$ beginnt und bei $T_{1PPs} + T_{BLOCK-1}$ endet, wobei $T_{BLOCK}$ die Dauer eines SFN-Übertragungsblocks ist, und wobei die folgenden Remapping-Regeln angewendet werden:

- zu berücksichtigende TS-Pakete müssen eine Ankunftszeit haben, die kürzer ist als die berechnete Zeit $T_{TX}(N)$;
- wenn es kein Paket gibt, das die Kriterien, gemultiplext zu werden, erfüllt, wird ein NULL-Paket eingesetzt;
- wenn es mehr als ein Paket gibt, das in den Ausgang eingesetzt werden sollte, wird das Paket mit dem niedrigsten Zeitstempel verwendet;
- wenn zwei Pakete genau dieselbe Ankunftszeit haben, wird das Paket mit dem höchsten Prioritätseingang verwendet;
- im Falle, dass die Differenz zwischen $T_{TX}(N)$ und dem VATS-Zeitstempel einen konfigurierten Wert $T_{BACKLOG}$ überschreitet, wird das Paket verworfen.

**7.** System zum deterministischen Remultiplexieren von Transportströmen in Einzelfrequenznetzen, wobei das System Mittel zum Durchführen des Verfahrens nach den Ansprüchen 1 bis 6 umfasst.

**Revendications**

**1.** Procédé pour le remultiplexage déterministe de flots de transport sur des réseaux à fréquence unique, SFN, le procédé comprenant les étapes suivantes effectuées au niveau de l'extrémité de tête principale :

- la réception de flux d'au moins une source, chaque flux étant multiplexé sur des multiplexeurs qui sont référencés par un signal 1PPS commun ;
- la prévision d'adaptateurs de SFN virtuels internes pour chaque multiplexeur, où ces adaptateurs génèrent des flots de SFN virtuels indiquant la structure de bloc spécifique au système à utiliser au niveau des régions de SFN de réception à distance ;

- l'insertion de paquets de marqueur temporel, TMP, dans lesdits flots de SFN virtuels, lesdits TMP comprenant des informations de synchronisation de SFN et de PCR mesurées par rapport aux dits signaux 1PPS, où lesdits TMP ont une fréquence correspondant à la fréquence de bloc de transmission des flots de SFN, et où lesdites informations de synchronisation de PCR comprennent une PCR et une $PCR_{TMP}$ qui est une copie de la PCR d'origine, où les horloges de synchronisation de PCR ont une fréquence de 27 MHz et sont verrouillées sur le même signal 1PPS ;

- l'application d'une adaptation de débit qui met en correspondance la méthode de modulation spécifique au système avec les flots de transport multiplexés finaux sortants,

et où les étapes suivantes sont effectuées au niveau de sites d'émetteurs régionaux :

- la réception d'au moins l'un desdits flots de transport multiplexés finaux sur les entrées de remultiplexeurs déterministes ;
- l'extraction des informations de synchronisation de SFN et de PCR à partir des marqueurs d'informations dans les flots de SFN virtuels pour produire des flots de sortie conformes et totalement déterministes qui seront acceptés par les modulateurs de SFN.

2. Procédé selon la revendication 1, où les adaptateurs de SFN virtuels génèrent en outre les informations spécifiques au programme et les métadonnées de contenu à utiliser dans les régions de SFN à distance.

3. Procédé selon la revendication 1, où le TMP comprend en outre :

- un contenu spécifique au système qui sera utilisé en tant que source pour la régénération de paquets de descripteur de bloc spécifiques au système, comme le MIP pour le DVB-T, au niveau de sites régionaux ;
- un horodatage idéal et un horodatage réel indiquant la position réelle dans le flot ;
- des valeurs de PCR correspondantes qui sont utilisées pour détecter et compenser une adaptation de débit dans la chaîne de transmission ;
- des contenus de paquet de descripteur de bloc spécifiques au système (par exemple MIP) ; et
- un temps de transmission pour le premier paquet dans le bloc, par rapport au 1PPS.

4. Procédé selon la revendication 1, où l'une des entrées des remultiplexeurs au niveau de chaque site d'émetteur régional est sélectionnée en tant que maître qui commandera le processus de construction des blocs de SFN sortants de l'émetteur, et chaque remultiplexeur effectue le multiplexage sur une base d'identification de paquet (PID).

5. Procédé selon les revendications 1 et 4, où les paramètres suivants et identiques sont configurés dans chaque remultiplexeur situé dans la même région de SFN :

- les entrées à valider, et un débit binaire fixe à utiliser pour chaque entrée ;
- l'entrée maître contenant les TMP qui seront utilisés en tant que marqueurs principaux pour le processus de remultiplexage ;
- les règles de filtrage et de reroutage de PID appliquées à chaque entrée pour décider des paquets qui devraient être réacheminés vers le multiplexeur de SFN régional, et reroutage et réacheminant les tables de PSI généralisées centralement et les métadonnées de contenu.

6. Procédé selon la revendication 5, où le paquet de marqueur temporel dans l'entrée maître définit une fenêtre de temps par rapport au 1PPS, laquelle débute à $T_{1PPS}$ et se termine à $T_{1PPS} + T_{BLOCK} - 1$, où $T_{BLOCK}$ est la durée d'un bloc de transmission de SFN, et où les règles de reroutage suivantes sont appliquées :

- les paquets de TS à prendre en considération doivent avoir un instant d'arrivée qui est inférieur au temps calculé $T_{TX}(N)$ ;
- s'il n'y a aucun paquet à multiplexer qui satisfait aux critères, alors un paquet NULL est inséré ;
- s'il y a plusieurs paquets qui devraient être insérés dans la sortie, le paquet avec l'horodatage le plus faible est utilisé ;
- si deux paquets ont exactement le même instant d'arrivée, le paquet avec l'entrée de priorité la plus élevée est utilisé ;
- dans le cas où la différence entre $T_{TX}(N)$ et l'horodatage VATS dépasse une valeur configurée $T_{BACKLOG}$, le paquet est abandonné.

**7.** Système pour le remultiplexage déterministe de flots de transport sur des réseaux à fréquence unique, le système comprenant des moyens pour effectuer le procédé selon les revendications 1 à 6.

Figure 1

Figure 2

## TMP(n) packet contents

PID = Configurable

$T_{BASE} = T_{1PPS}$

$T_{TMP}(n) = T_{1PPS} + T_{TX\_DELAY}$

$PCR_{TMP}(n) = PCR_{TMP}(n-1) + (T_{TMP}(n) - T_{TMP}(n-1))$

$PCR = PCR_{TMP}(n)$

$BDP_C$ = System specific
Block Descriptor
Packet contents
*(For DVB-T: MIP)*

$T_{B\_TX}$ = Transmission time for block relative to 1PPS

*PCR value is stored as normal in TS packet adaptation field and will be restamped as necessary in further remux processes.*

$T_{TX\_DELAY}$

$T_{TMP}$

$T_{1PPS}$

1PPS:

Virtual SFN adapter:

TMP

TMP(n)

After MUX output:

TMP(n-1)

Figure 3

Figure 4